# EUROPÄISCHE PATENTSCHRIFT

(11) **EP 0 401 476 B1**
(45) Veröffentlichungstag und Bekanntmachung des Hinweises auf die Patenterteilung: **14.07.1993**
(21) Anmeldenummer: 90104596.3
(22) Anmeldetag: 10.03.1990
(51) Int. Cl.: H04N 5/782, G11B 27/02

(54) **Videorecorder mit einer Einrichtung zum elektronischen Schneiden von Bildsignalen bei in Schrägspuren eines Magnetbandes aufgezeichneten Bild- und FM-Tonsignalen**
Video tape recorder with an arrangement for electronic editing of picture signals in skewed tracks of a magnetic tape with recorded picture and FM-sound signals
Magnétoscope avec équipement d'édition électronique de signaux d'image sur les pistes obliques d'une bande magnétique avec de signaux d'image et de son enregistrés

(30) Priorität: 05.06.1989 DE 3918264
(43) Veröffentlichungstag der Anmeldung: 12.12.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Mederer, Werner, Grundig E.M.V., Max Grundig, D-8510 Fürth/Bay (DE); Stacho, Reinhard, Grundig E.M.V., Max Grundig, D-8510 Fürth/Bay (DE); Spanner, Egbert, Grundig E.M.V., Max Grundig, D-8510 Fürth/Bay (DE); Borgelt, Michael, Grundig E.M.V., Max Grundig, D-8510 Fürth/Bay (DE)

(56) Entgegenhaltungen:
- EP-A- 0 288 276
- GB-A- 2 115 595
- US-A- 4 571 641
- US-A- 4 768 105

## Beschreibung

Die Erfindung betrifft einen Videorecorder mit einer Einrichtung zum elektronischen Schneiden von Bildsignalen bei in Schrägspuren eines Magnetbandes aufgezeichneten Bild- und FM-Tonsignalen mit den im Oberbegriff des Anspruchs 1 angegebenen Merkmalen.

Aus der Zeitschrift "Funk-Technik", 1983, Heft 12, Seiten 498-500, sind Videorecorder bekannt, bei denen ein Bild- und ein frequenzmoduliertes Tonsignal gemeinsam in Schrägspuren eines Magnetbandes aufgezeichnet sind. Die Eindringtiefe der dem Bildsignal entsprechenden Magnetisierung des Magnetbandes ist dabei geringer als die Eindringtiefe der dem Tonsignal entsprechenden Magnetisierung. Bei den bekannten Videorecordern ist - um Kompatibilität mit herkömmlichen Videorecordern sicherzustellen, bei denen keine FM-Tonsignale in den Schrägspuren aufgezeichnet sinddas Tonsignal zusätzlich auf einer Längsspur am Rand des Magnetbandes aufgezeichnet. Bei der Wiedergabe einer bespielten Magnetbandkassette kann mittels einer Detektorschaltung, die das Vorhandensein oder Fehlen einer Schrägspur-FM-Tonaufzeichnung erkennt, automatisch zwischen einer Tonwiedergabe aus den Schrägspuren mit hoher Tonqualität und einer Tonwiedergabe aus der Längsspur mit einer verminderten Tonqualität umgeschaltet werden.

Weiterhin ist es aus der DE-C-34 21 197 bzw. der korrespondierenden EP-A2-0 166 861 bekannt, ein bereits mit einem FM-Tonsignal bespieltes Videomagnetband nachträglich zur zusätzlichen Aufzeichnung einer Fernsehsendung zu verwenden, ohne daß das bereits aufgezeichnete FM-Tonsignal gelöscht wird. Hierzu wird das Bildsignal der Fernsehsendung mit geringer Eindringtiefe der zugehörigen Magnetisierung ebenfalls in den Schrägspuren des Magnetbandes und das zugehörige Tonsignal ausschließlich in einer Längsspur am Bandrand aufgezeichnet.

Weiterhin sind beispielsweise aus der DE-C-35 15 251 und der DE-C-32 23 151 Videorecorder bekannt, die eine Einrichtung zum elektronischen Schneiden von in Schrägspuren eines Magnetbandes aufgezeichneten Bildsignalen aufweisen. Bei den bekannten Einrichtungen sind jeweils rotierende Löschköpfe vorgesehen, die an vom Benutzer mittels einer Bedieneinheit markierten Bandstellen die in den Schrägspuren aufgezeichneten Bildsignale löschen, so daß anschließend in den gelöschten Schrägspuren mittels der rotierenden Videoköpfe neue Bildsignale aufgezeichnet werden können. Eine Aufzeichnung bzw. ein Schneiden von FM-Tonsignalen ist bei diesen bekannten Videorecordern nicht vorgesehen.

Die Aufgabe der Erfindung besteht darin, einen Videorecorder mit den im Oberbegriff des Anspruchs 1 angegebenen Merkmalen derart weiterzubilden, daß mit möglichst geringem zusätzlichen Schaltungsaufwand und mit möglichst geringen Störungen beim Tonsignal ein elektronisches Schneiden von Bildsignalen möglich wird.

Diese Aufgabe wird bei einem Videorecorder mit den im Oberbegriff des Anspruchs 1 angegebenen Merkmalen durch die im kennzeichnenden Teil des Anspruchs 1 angegebenen Merkmale gelöst.

Die Vorteile der Erfindung bestehen insbesondere darin, daß mittels des beanspruchten Videorecorders ein elektronisches Schneiden von Bildsignalen bei sog. "Hifi-Videorecordern", bei denen in den Schrägspuren neben einem Bildsignal auch ein FM-Tonsignal und in einer Längsspur am Bandrand ebenfalls das Tonsignal aufgezeichnet ist, möglich wird und dabei wegen der Übertragung der in der Längsspur am Bandrand aufgezeichneten Tonsignale als FM-Tonsignale in die Schrägspuren Umschaltgeräusche, wie sie bei einem eventuellen Übergang von einer Schrägspur-FM-Tonwiedergabe zu einer Längsspur-Tonwiedergabe, und umgekehrt, entstehen würden, vermieden werden. Weitere vorteilhafte Eigenschaften des beanspruchten Videorecorders ergeben sich aus der Erläuterung eines Ausführungsbeispiels anhand der (einzigen) Figur.

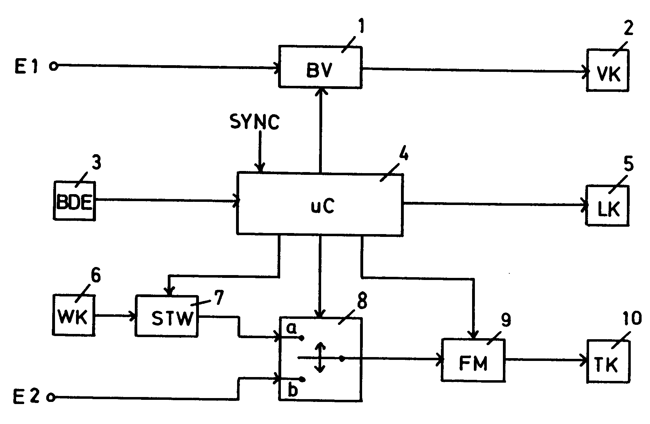

Die Figur zeigt ein Blockschaltbild mit den zum Verständnis der Erfindung notwendigen Bauteilen eines Videorecorders. Dies sind: eine Bildsignalverarbeitungsschaltung 1, eine Videokopfeinheit 2 mit rotierenden Videoköpfen, eine Bedieneinheit 3, ein Mikrocomputer 4, eine Löschkopfeinheit 5 mit einem oder mehreren rotierenden Löschköpfen, ein feststehender Tonkopf 6 zur Aufzeichnung bzw. Wiedergabe eines Tonsignals auf bzw. aus einer Längsspur am Bandrand, eine Tonsignalwiedergabeschaltung 7 zur Verstärkung und Entzerrung der vom Tonkopf 6 wiedergegebenen Tonsignale, ein Wahlschalter 8, ein Frequenzmodulator 9 und eine Tonkopfeinheit 10 mit rotierenden Tonköpfen.

Das elektronische Schneiden von Bildsignalen geschieht wie folgt: Zunächst wird mittels der rotierenden Videoköpfe 2 das bereits aufgezeichnete Bildsignal aus den Schrägspuren des Magnetbandes wiedergegeben. Der Benutzer verfolgt das wiedergegebene Bildsignal am Bildschirm eines nicht gezeichneten, an den Videorecorder angeschlossenen Fernsehempfängers und markiert mittels der Bedienenheit 3 den gwünschten Einstiegs- und Ausstiegs-Schnittpunkt. Diese Informationen werden dem Mikrocomputer 4 zugeführt, der unter Verwendung der ihm ebenfalls zugeführten Synchronsignale aus dem neu einzusetzenden Bildsignal den gesamten Schnittvorgang steuert. Dieser wird durch einen mittels der Bedieneinheit 3 eingegebenen Bedienbefehl ausgelöst.

Der Mikrocomputer steuert zunächst den rotierenden Löschkopf 5 zur Löschung der in den durch die Festlegung des Einstiegs- und Ausstiegs-Schnittpunktes definierten Schrägspuren aufgezeichneten Signale an. Durch diesen Löschvorgang werden sowohl die in den Schrägspuren aufgezeichneten Bildsignale als auch - in unerwünschter Weise - die in den Schrägspuren aufgezeichneten FM-Tonsignale gelöscht.

Anschließend aktiviert der Mikrocomputer 4 die Tonwiedergabschaltung 7 und bringt gleichzeitig den Wahlschalter 8 in die Schaltstellung a. Folglich werden die aus der Längsspur am Bandrand wiedergegebenen Tonsignale über den Wahlschalter 8 an den Frequenzmodulator 9 angelegt und als Ersatz für die gelöschten FM-Tonsignale in Form frequenzmodulierter Tonsignale mittels der rotierenden Tonköpfe 10 in den Schrägspuren aufgezeichnet.

Anschließend aktiviert der Mikrocomputer 4 die Bildsignalverarbeitungsschaltung 1 zur Verarbeitung des dem Bildsignaleingang E1 zugeführten neu einzusetzenden Bildsignals, welches vom Ausgang der Bildsignalverarbeitungsschaltung 1 den rotierenden Videoköpfen 2 zur Aufzeichnung in den Schrägspuren zugeführt wird. Die Aufzeichnung dieses Bildsignals erfolgt - wie bereits oben beschrieben - derart, daß die Eindringtiefe der dem Bildsignal entsprechenden Magnetisierung kleiner ist als die Eindringtiefe der dem bereits vorher aufgezeichneten Tonsignal entsprechenden Magnetisierung.

Bei dem vorstehend beschriebenen Videorecorder ist zwar nach Beendigung des elektronischen Schnittes die im Bereich der Einfügung zur Verfügung stehende Tonqualität im Vergleich zur eigentlich erzielbaren FM-Tonqualität verringert, aber es treten keine auf einen Umschaltvorgang zwischen einer Schrägspur-FM-Tonwiedergabe und einer Längsspur-Tonwiedergabe, und umgekehrt, zurückzuführende Umschaltgeräusche auf.

Die vorstehend beschriebene Art und Weise eines elektronischen Schnittes ist in vorteilhafter Weise auch bei einem Videorecorder mit einer Longplay-Betriebsart verwendbar.

## Patentansprüche

1. Videorecorder mit einer Einrichtung zum elektronischen Schneiden von Bildsignalen bei in Schrägspuren eines Magnetbandes aufgezeichneten Bild und FM-Tonsignalen, welche aufweist:
- eine Bildsignalverarbeitungsschaltung (1),
- rotierende Videoköpfe (2) zur Aufzeichnung des Bildsignals in Schrägspuren ednes Magnetbandes,
- einem Frequenzmodulator (9) zur Frequenzmodulation eines Tonträgers mit einem Tonsignal,
- rotierende Tonköpfe (10) zur Aufzeichnung des frequenzmodulierten Tonsignals ebenfalls in den Schrägspuren des Magnetbandes, wobei die Eindringtiefe der dem Tonsignal entsprechenden Magnetisierung des Magnetbandes größer ist als die Eindringtiefe der dem Bildsignal entsprechenden Magnetisierung,
- einen rotierenden Löschkopf (5),
- einen feststehenden Tonkopf (6) zur Aufzeichnung bzw. Wiedergabe eines Tonsignals in bzw. aus einer Längsspur des Magnetbandes,
- eine Bedieneinheit (3) zur Markierung der Schnittstellen, und
- einen Mikrocomputer (4) zur Steuerung des Schnittvorganges,
**dadurch gekennzeichnet,** daß ein vom Mikrocomputer (4) angesteuerter Wahlschalter (8) vorgesehen ist, über welchen in Ansprache auf einen mittels der Bedieneinheit (3) eingegebenen Bedienbefehl das vom feststehenden Wiedergabekopf (6) aus der Längsspur des Magnetbandes wiedergegebene Tonsignal dem Frequenzmodulator (9) zugeführt wird.

## Claims

1. Video recorder comprising a device for electronically editing video signals in the case of video and FM sound signals recorded on helical tracks of a magnetic tape, which exhibits:
- a video signal processing circuit (1),
- rotating video heads (2) for recording the video signal on helical tracks of the magnetic tape,
- a frequency modulator (9) for frequency-modulating a sound subcarrier with a sound signal,
- rotating sound heads (10) for also recording the frequency-modulated sound signal on the helical tracks of the magnetic tape, the depth of penetration of the magnetisation of the magnetic tape, corresponding to the sound signal, being greater than the depth of penetration of the magnetisation corresponding to the video signal,
- a rotating erase head (5),
- a fixed sound head (6) for recording or replaying a sound signal on and respectively from a longitudinal track of the magnetic tape,
- an operating unit (3) for marking the edit points, and
- a microcomputer (4) for controlling the edit process,
characterised in that a selection switch (8) operated by the microcomputer (4) is provided via which the sound signal replayed from the longitudinal track of the magnetic tape by the fixed replay head (6) is supplied to the frequency modulator (9) in response to an operating command input by means of the operating unit (3).

## Revendications

1. Enregistreur vidéo comportant un dispositif pour réaliser le montage électronique de signaux acoustiques d'image dans le cas de signaux d'image et de signaux acoustiques FM, enregistrés sur des pistes obliques d'une bande magnétique, et qui comprend :
- un circuit (1) de traitement des signaux d'image,
- des têtes vidéo rotatives (2) pour enregistrer le signal d'image sur des pistes obliques de la bande magnétique,
- un modulateur de fréquence (9) pour moduler la fréquence d'une porteuse son avec un signal acoustique,
- des têtes son rotatives (10) pour enregistrer le signal acoustique modulé en fréquence également sur les pistes obliques de la bande magnétique, la profondeur de pénétration de l'aimantation de la bande magnétique, correspondant au signal acoustique étant supérieure à la profondeur de pénétration de l'aimantation correspondant au signal d'image,
- une tête d'effacement rotative (5),
- une tête son fixe (6) pour l'enregistrement et la reproduction d'un signal acoustique dans ou à partir d'une piste longitudinale de la bande magnétique,
- une unité de commande (3) pour le marquarge des interfaces, et
- un micro-ordinateur (4) pour la commande de l'opération de montage,
caractérisé en ce qu'il est prévu un commutateur de sélection (8) qui est commandé par le micro-ordinateur (4) et au moyen duquel le signal acoustique reproduit par la tête fixe de reproduction (6) à partir de la piste longitudinale de la bande magnétique, est envoyé au modulateur de fréquence (9), en réponse à une instruction de commande introduite au moyen de l'unité de commande (3).
